(19) Europäisches Patentamt European Patent Office Office européen des brevets

(11) **EP 1 565 649 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(21) Anmeldenummer: **03785523.6**

(22) Anmeldetag: **17.11.2003**

(51) Int Cl.:
*F02D 41/40* (2006.01)    *F02D 35/00* (2006.01)

(86) Internationale Anmeldenummer:
**PCT/DE2003/003796**

(87) Internationale Veröffentlichungsnummer:
**WO 2004/046530 (03.06.2004 Gazette 2004/23)**

(54) **VERFAHREN ZUR ERMITTLUNG DER EINSPRITZMENGE EINER BRENNKRAFTMASCHINE**

METHOD FOR DETERMINING THE QUANTITY OF FUEL INJECTED INTO AN INTERNAL COMBUSTION ENGINE

PROCEDE POUR DETERMINER LA QUANTITE DE CARBURANT INJECTE DANS UN MOTEUR A COMBUSTION INTERNE

(84) Benannte Vertragsstaaten:
**DE FR GB IT**

(30) Priorität: **19.11.2002 DE 10253932**

(43) Veröffentlichungstag der Anmeldung:
**24.08.2005 Patentblatt 2005/34**

(73) Patentinhaber: **VDO Automotive AG**
**93055 Regensburg (DE)**

(72) Erfinder: **RABL, Hans, Peter**
**93309 Kehlheim (DE)**

(56) Entgegenhaltungen:
**EP-A- 0 844 380**    **EP-A- 1 132 584**
**DE-A- 10 006 609**   **DE-A- 10 115 966**

## Beschreibung

Die Erfindung betrifft ein Verfahren zur Ermittlung der Einspritzmenge einer Brennkraftmaschine gemäß dem Oberbegriff des Anspruchs 1.

Es ist bekannt, die Laufruhe einer Brennkraftmaschine auszuwerten, um daraus Rückschlüsse auf die Einspritzmenge in den verschiedenen Brennräumen zu ziehen. Hierzu wird mit einem Drehzahlsensor die Drehbeschleunigung der Kurbelwelle gemessen, die durch die jeweilige Einspritzmenge bestimmt wird. So verursacht eine große Einspritzmenge in dem betroffenen Verbrennungstakt eine entsprechend große Drehbeschleunigung der Kurbelwelle, wohingegen eine kleine Einspritzmenge nur zu einer entsprechend kleineren Drehbeschleunigung führt. Die Einspritzmenge kann jedoch aufgrund von fertigungs- und alterungsbedingten Bauteiltoleranzen zwischen den aufeinander folgenden Verbrennungstakten und zwischen den einzelnen Brennräumen schwanken, was zu unterschiedlichen Drehbeschleunigungen führt und damit eine Laufunruhe der Brennkraftmaschine verursacht. Dieser Laufunruhe wird bei bekannten Brennkraftmaschinen dadurch entgegengewirkt, dass die Einspritzmengen in den einzelnen Brennräumen durch eine geeignete Ansteuerung der verschiedenen Injektoren aneinander angeglichen werden. Die Steuersignale für die verschiedenen Injektoren werden hierbei solange verändert, bis jede Einspritzung die gleiche Drehbeschleunigung der Kurbelwelle verursacht, was auf eine einheitliche Einspritzmenge in den verschiedenen Brennräumen schließen lässt.

Nachteilig an diesem bekannten Verfahren ist jedoch die Tatsache, dass nur die gesamte Einspritzmenge ermittelt werden kann. Bei modernen Brennkraftmaschinen erfolgt jedoch zusätzlich zu einer Haupteinspritzung noch eine Voreinspritzung der der eine Nacheinspritzung. So kann eine Voreinspritzung eingesetzt werden, um die Geräusch- und Schadstoffemissionen zu verringern, während eine Nacheinspritzung sinnvoll sein kann, um die Abgastemperatur in einem Oxidationskatalysator zu erhöhen. Eine derartige Vor- oder Nacheinspritzung kann jedoch bei dem bekannten Verfahren nicht getrennt von der Haupteinspritzung untersucht werden, so dass es bisher nicht möglich ist, die Vor- oder Nacheinspritzmenge zu ermitteln.

Es ist weiterhin bekannt, die Abgaszusammensetzung zu messen, um daraus Rückschlüsse auf die Einspritzmenge zu ziehen. Hierzu wird mittels einer Lambda-Sonde die Luftzahl im Abgas der Brennkraftmaschine gemessen, wobei die Lambda-Sonde so angeordnet wird, dass die gemessene Luftzahl den einzelnen Einspritzereignissen zugeordnet werden kann. Dies ist wichtig, damit aus der gemessenen Luftzahl auf die jeweilige Einspritzmenge geschlossen werden kann. Es ist dabei jedoch äußerst schwierig, die einzelnen Einspritzereignisse in dem zeitlichen Verlauf der gemessenen Luftzahl voneinander zu unterscheiden, wobei eine Differenzierung zwischen Haupteinspritzung und Vor- oder Nacheinspritzung nahezu unmöglich ist.

Ferner ist es bekannt, anstelle der Luftzahl den Kohlenwasserstoffanteil oder den Kohlenmonoxidanteil im Abgas zu messen, um daraus Rückschlüsse auf die Einspritzmenge zu ziehen. Auch hierbei ist es jedoch schwierig, in dem Messsignal zwischen der Haupteinspritzung und der Vor- oder Nacheinspritzung zu differenzieren, so dass die Bestimmung der Einspritzmenge bei einer Nacheinspritzung kompliziert ist.

Aus DE 199 61 292 A1 ist es bekannt, zur Berücksichtigung von Bauteiltoleranzen zylinderindividuelle Abgaswerte zu ermitteln, welche über eine Einspritzmengenausgleichsregelung zur Zylindergleichstellung heran gezogen werden. Die Bestimmung der Nacheinspritzmenge ist hierbei jedoch nicht möglich. Ferner ist auch auf DE 199 61 299 A2 hinzuweisen, die eine Abgasrückführung beschreibt.

Der Erfindung liegt also die Aufgabe zugrunde, bei einer Voreinspritzung oder einer Nacheinspritzung die eingespritzten Kraftstoffmengen zu ermitteln.

Diese Aufgabe wird, ausgehend von dem eingangs beschriebenen bekannten Verfahren gemäß dem Oberbegriff des Anspruchs 1, durch die kennzeichnenden Merkmale des Anspruchs 1 gelöst.

Die Erfindung umfasst die allgemeine technische Lehre, die Nacheinspritzmenge oder die Voreinspritzmenge außerhalb des normalen Betriebs der Brennkraftmaschine in einem besonderen Diagnosebetrieb zu ermitteln.

Bei diesem Diagnosebetrieb erfolgt eine Nacheinspritzung vorzugsweise während des Auslasstaktes der Brennkraftmaschine, so dass der bei der Nacheinspritzung eingespritzte Kraftstoff nicht verbrannt wird.

Es ist jedoch alternativ auch möglich, dass die Nacheinspritzung im Diagnosebetrieb während des Expansionstaktes erfolgt, sofern die Nacheinspritzung so spät erfolgt, dass keine Verbrennung erfolgt. Dies ist in der Regel dann gegeben, wenn die Nacheinspritzung erst erfolgt, wenn die Brenndauer der Haupteinspritzung beendet ist. Bei einer Nacheinspritzung während des Expansionstaktes der Brennkraftmaschine erfolgt die Nacheinspritzung deshalb vorzugsweise bei einem Kurbelwellenwinkel im Bereich von 90° bis 180° nach dem oberen Totpunkt (OT).

Das Abgas der Brennkraftmaschine mit dem unverbrannten Kraftstoff der Nacheinspritzung kann dann durch eine herkömmliche Abgasrückführung in den Ansaugtrakt der Brennkraftmaschine zurückgeführt werden und sorgt dort für eine Änderung der Abgaszusammensetzung, was einen Rückschluss auf die Nacheinspritzmenge zulässt.

Das erfindungsgemäße Verfahren funktioniert jedoch auch ohne eine Abgasrückführung, da auch unverbrannter Kraftstoff im Abgas zu einer Veränderung der Luftzahl führt.

Im Rahmen des erfindungsgemäßen Diagnosebetriebs wird ein Abgaswert ermittelt, der die Abgaszusammensetzung der Brennkraftmaschine wiedergibt und dadurch einen Rückschluss auf die eingespritzte Kraftstoffmenge erlaubt. Vorzugsweise handelt es sich bei diesem Abgaswert um die Luftzahl des Abgases, die von einer Lambda-Sonde gemessen wird. Es ist jedoch im Rahmen der Erfindung grundsätzlich auch möglich, andere Abgaswerte zu messen und auszuwerten, um die eingespritzte Kraftstoffmenge zu ermitteln.

Bei einer Abgasrückführung erfolgt die Messung des Abgaswertes für die Bestimmung der Nacheinspritzmenge vorzugsweise stromabwärts nach der Abgasrückführung, da die Abgasrückführrate dann keinen Einfluss auf die Berechnung der Nacheinspritzmenge hat.

Die Nacheinspritzmenge $m_N$ berechnet sich dann aus der Haupteinspritzmenge $m_H$, der Luftzahl $\lambda_H$ bei alleiniger Haupteinspritzung ohne Nacheinspritzung sowie der Luftzahl $\lambda_{HN}$ bei Haupt- und Nacheinspritzung nach folgender Formel:

$$m_N = m_H \cdot \left( \frac{\lambda_H}{\lambda_{HN}} - 1 \right)$$

Bei einer Haupteinspritzmenge $m_H$=4 mg/Hub und einer durch die Nacheinspritzung verursachten Gemischanfettung von $\lambda_H$=3 auf $\lambda_{HN}$=2,4 ergibt sich somit eine Nacheinspritzmenge von $m_N$=1 mg/Hub.

Hierbei werden die Luftzahlen $\lambda_H$, $\lambda_{HN}$ mit und ohne Nacheinspritzung gemessen, während die Haupteinspritzmenge $m_H$ als bekannt vorausgesetzt wird.

In einer Variante der Erfindung wird zusätzlich der Frischluftmassenstrom der Brennkraftmaschine gemessen, um daraus die Haupteinspritzmenge abzuleiten. Diese Messung des Frischluftmassenstroms kann beispielsweise durch einen herkömmlichen Hitzdraht-Luftmassenstrom-Durchflussmesser erfolgen, jedoch ist die Erfindung hinsichtlich der Messung des Frischluftmassenstroms nicht auf diesen Sensortyp beschränkt. Die von der Brennkraftmaschine angesaugte Luftmasse wird dann vorzugsweise durch Integration des gemessenen Frischluftmassenstroms ermittelt. Die Haupteinspritzmenge $m_H$ ergibt sich dann aus dem stöchiometrischen Luft/Kraftstoffverhältnis k≈14,7, dem gemessenen Frischluftmassenstrom $Q_L$ bzw. der zugeführten Frischluftmasse $m_L$ und der Luftzahl $\lambda_H$ ohne Nacheinspritzung nach folgender Formel:

$$m_H = \frac{m_L}{\lambda_H \cdot k} = \frac{\int Q_L dt}{\lambda_H \cdot k}$$

Die Nacheinspritzmenge $m_N$ ergibt sich dann durch Kombination der beiden vorstehenden Formeln aus dem Frischluftmassenstrom $Q_L$=$dm_L$/dt, der Luftzahl $\lambda_H$ ohne Nacheinspritzung, der Luftzahl $\lambda_{HN}$ bei Haupt- und Nacheinspritzung und dem stöchiometrischen Luft/Kraftstoff-Verhältnis k≈14,7 nach folgender Formel:

$$m_N = \left( \frac{1}{\lambda_{HN}} - \frac{1}{\lambda_H} \right) \cdot \left( \frac{\int Q_L dt}{k} \right)$$

Hierbei werden die Luftzahlen $\lambda_H$, $\lambda_{HN}$ mit und ohne Nacheinspritzung sowie der Frischluftmassenstrom $Q_L$ gemessen, während das stöchiometrische Kraftstoff-/Luftverhältnis k≈14,7 bekannt ist. Die genaue Kenntnis der Haupteinspritzmenge ist hierbei also nicht erforderlich.

Es ist jedoch alternativ auch möglich, den Abgaswert für die Bestimmung der Nacheinspritzmenge stromaufwärts vor der Abgasrückführung innerhalb der Rückführschleife zu messen, wobei dann allerdings die Abgasrückführrate berücksichtigt werden muss.

Das erfindungsgemäße Verfahren erfordert nicht zwingendermaßen die Bestimmung des Absolutwerts der Nacheinspritzmenge. Es ist vielmehr auch möglich, dass im Rahmen des erfindungsgemäßen Diagnosebetriebs nur die relative Nacheinspritzmenge in Bezug auf die als bekannt vorausgesetzte Haupteinspritzmenge ermittelt wird. Beispielsweise kann durch das erfindungsgemäße Verfahren ermittelt werden, wie der prozentuale Anteil der Nacheinspritzmenge an der Haupteinspritzmenge ist.

Neben der vorstehend beschriebenen Bestimmung der Nacheinspritzmenge ermöglicht das erfindungsgemäße Verfahren auch die Ermittlung der Voreinspritzmenge. Hierbei wird die Tatsache ausgenutzt, dass die Einspritzmenge bei Vor- oder Nacheinspritzung im wesentlichen von der Einspritzdauer und dem Differenzdruck zwischen dem Einspritzdruck und dem Gegendruck im Brennraum der Brennkraftmaschine abhängt, der wiederum durch den Einspritzzeitpunkt bestimmt wird. Zur Bestimmung der Voreinspritzmenge bei einem vorgegebenen Voreinspritzzeitpunkt und einer vorgegebenen Voreinspritzdauer sollte das erfindungsgemäße Diagnoseverfahren also mit einer Nacheinspritzung durchgeführt werden, bei welcher der gleiche Gegendruck im Brennraum herrscht. Da der Gegendruck im Brennraum im wesentlichen von dem Einspritzzeitpunkt abhängt, sollte also der Nacheinspritzzeitpunkt entsprechend ausgewählt werden, damit bei der Nacheinspritzung im Diagnosebetrieb die gleichen Einspritzbedingungen vorliegen wie bei der eigentlichen Voreinspritzung, für die die Voreinspritzmenge ermittelt werden soll.

Bei großen Einspritzdrücken ist jedoch der Gegendruck in dem Brennraum vernachlässigbar klein, so dass die Einspritzmenge von dem Einspritzzeitpunkt weitgehend unabhängig ist und nur durch die Einspritzdauer bestimmt wird. In diesem Fall muss das Diagnoseverfahren also zur Bestimmung der Voreinspritzmenge nicht zu einem bestimmten Einspritzzeitpunkt durchgeführt werden.

In einer Variante der Erfindung wird nicht nur eine bestimmte Vor- oder Nacheinspritzmenge ermittelt, die unter bestimmten Betriebsbedingungen (Einspritzzeitpunkt, Einspritzdauer, etc.) eingespritzt wird. Vielmehr werden die Betriebsbedingungen variiert, wobei jeweils die resultierende Nacheinspritzmenge in der vorstehend beschriebenen Weise ermittelt wird. Beispielsweise kann die Nacheinspritzmenge nacheinander für unterschiedliche Nacheinspritzzeitpunkte und verschiedene Nacheinspritzdauern ermittelt werden. Auf diese Weise kann die Abhängigkeit der Nacheinspritzmenge von Einspritzzeitpunkt und Einspritzdauer ermittelt und beispielsweise in einem Kennfeld abgespeichert werden. Während des normalen Betriebs der Brennkraftmaschine kann dann auf die in dem Kennfeld gespeicherten Daten zurückgegriffen werden, um die Vor- oder Nacheinspritzmenge zu ermitteln.

Das erfindungsgemäße Verfahren ist unter anderem bei Ottomotoren und Dieselmotoren anwendbar, jedoch ist die Erfindung nicht auf diese Typen von Brennkraftmaschinen beschränkt. Vorzugsweise wird das erfindungsgemäße Verfahren jedoch bei einem Common-Rail-Einspritzsystem eines Dieselmotors eingesetzt.

Andere vorteilhafte Weiterbildungen der Erfindung sind in den Unteransprüchen enthalten oder werden nachstehend zusammen mit der Beschreibung des bevorzugten Ausführungsbeispiels der Erfindung anhand der Zeichnungen erläutert. Es zeigen:

Figur 1a und 1b    das erfindungsgemäße Verfahren als Flussdiagramm,

Figur 1c    eine Alternative zu dem in Figur 1b gezeigten Verfahrensabschnitt,

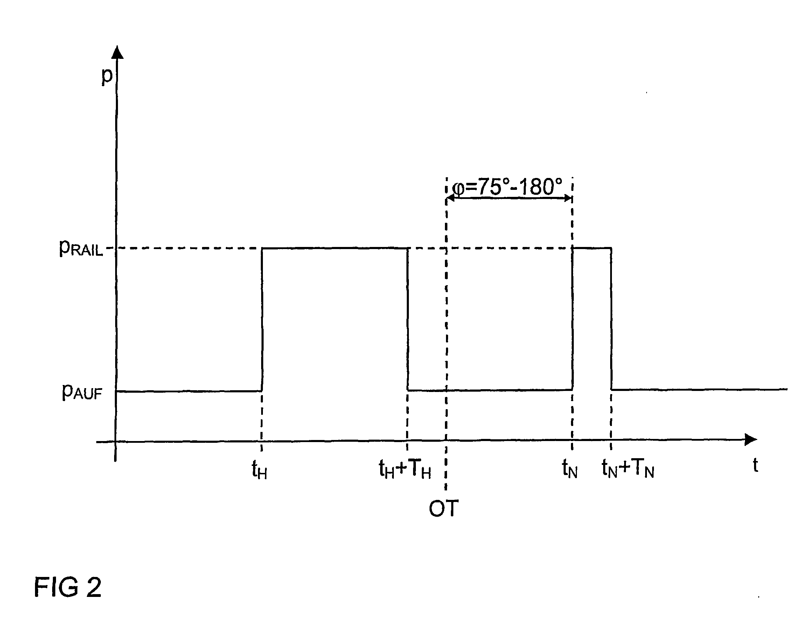

Figur 2    einen Einspritzverlauf mit Haupt- und Nacheinspritzung bei einem Common-Rail-Einspritzsystem,

Figur 3    eine Kennlinie, welche die Abhängigkeit der Nacheinspritzmenge von der Dauer der Nacheinspritzung zeigt sowie

Figur 4    eine Weiterbildung des erfindungsgemäßen Verfahrens.

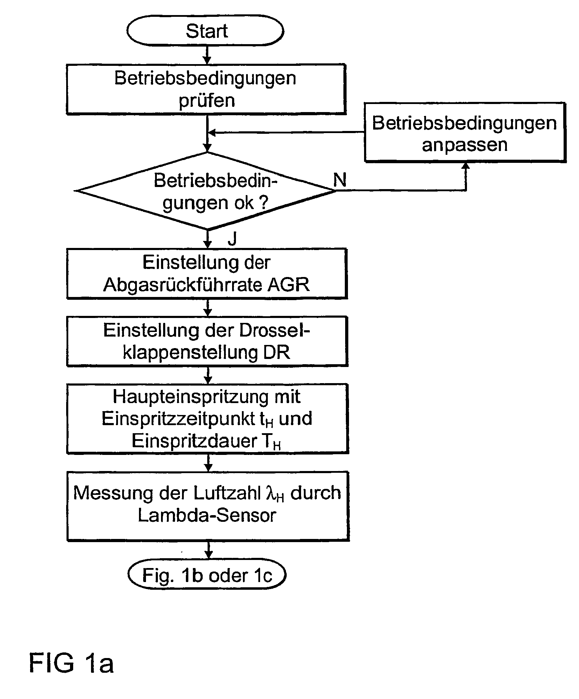

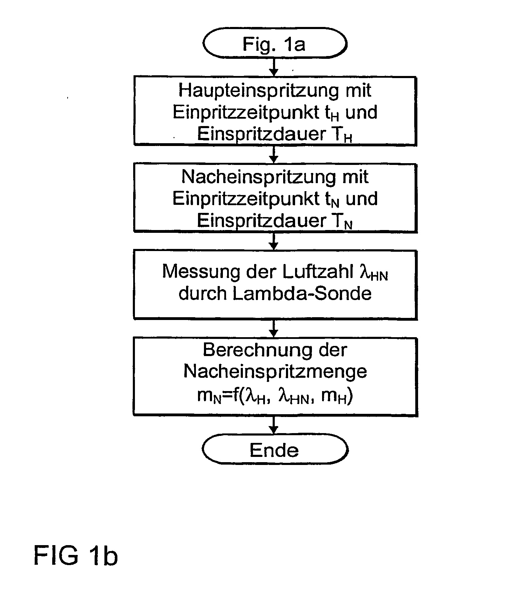

Das in den Figuren 1a und 1b dargestellte erfindungsgemäße Verfahren ermöglicht die Bestimmung der Nacheinspritzmenge einer Brennkraftmaschine in einem besonderen Diagnosebetrieb der Brennkraftmaschine.

Zu Beginn des Verfahrens wird zunächst geprüft, ob die Bedingungen für den Diagnosebetrieb erfüllt sind. So sollte der Einspritzdruck beim Diagnosebetrieb innerhalb vorgegebener Grenzen liegen. Dies ist wichtig, da die Einspritzmenge unter anderem von dem Einspritzdruck abhängt, so dass Abweichungen des Einspritzdrucks zu Messfehlern führen würden.

Falls die Bedingungen für den Diagnosebetrieb nicht erfüllt sind, so werden die Bedingungen zunächst entsprechend angepasst, indem beispielsweise der Einspritzdruck entsprechend verändert wird.

Falls die Bedingungen für den Diagnosebetrieb dagegen erfüllt sind, so wird in einem nächsten Schritt die Abgasrückführrate (AGR) ermittelt, die den prozentualen Anteil des Abgases der Brennkraftmaschine angibt, der in den Ansaugtrakt der Brennkraftmaschine zurückgeführt wird. Diese Abgasrückführung ermöglicht im normalen Betrieb der Brennkraftmaschine eine Reduzierung der Stickoxidemissionen. Die Abgasrückführrate kann hierbei durch ein Abgasrückführventil eingestellt werden und liegt deshalb in der elektronischen Motorsteuerung bereits als Steuerwert vor. Die Abgasrückführung ist jedoch für den erfindungsgemäßen Diagnosebetrieb nicht erforderlich. Es kann vielmehr sinnvoll sein, die Abgasrückführung während des Diagnosebetriebs durch eine entsprechende Ansteuerung des Abgasrückführventils abzuschalten.

Anschließend wird dann in einem weiteren Schritt die Drosselklappenstellung DR auf einen vorgegebenen Wert eingestellt, der eine optimale Bestimmung der Nacheinspritzmenge ermöglicht.

Im nächsten Schritt erfolgt dann eine Haupteinspritzung, wobei der Einspritzzeitpunkt $t_H$ und die Haupteinspritzdauer $T_H$ vorgegeben wird.

Dabei wird mittels einer Lambda-Sonde die Luftzahl $\lambda_H$ im Abgas der Brennkraftmaschine gemessen, wobei die Luftzahl $\lambda_H$ die Abgaszusammensetzung bei alleiniger Haupteinspritzung ohne Nacheinspritzung wiedergibt.

Im folgenden wird nun der in Figur 1b dargestellte Teil des erfindungsgemäßen Verfahrens beschrieben, in dem die eigentliche Bestimmung der Nacheinspritzmenge erfolgt.

Hierzu erfolgt wiederum zum Zeitpunkt $t_H$ innerhalb der einzelnen Verbrennungszyklen eine Haupteinspritzung mit der Einspritzdauer $T_H$.

Zusätzlich erfolgt im Diagnosebetrieb in jedem Verbrennungszyklus zum Zeitpunkt $t_N$ eine Nacheinspritzung mit der Einspritzdauer $T_N$, wobei der Einspritzzeitpunkt $t_N$ der Nacheinspritzung jeweils im Auslasstakt der einzelnen Verbrennungszyklen liegt. Die während der Nacheinspritzung eingespritzte Kraftstoffmenge $m_N$ wird deshalb nicht verbrannt und gelangt durch die Abgasrückführung entsprechend der vorgegebenen Abgasrückführrate AGR anteilig zurück in den Ansaugtrakt der Brennkraftmaschine, was zu einer Erhöhung des Füllungsgrades führt und damit das Drehmoment erhöht. Die Abgasrückführung ist jedoch für den erfindungsgemäßen Diagnosebetrieb unerheblich, da verbrannter Kraftstoff und unverbrannter Kraftstoff gleichermaßen zu einer Änderung der Luftzahl im Abgasstrom beitragen.

Dabei wird die Luftzahl $\lambda_{HN}$ gemessen, die sich nun bei Haupt- und Nacheinspritzung im Abgas der Brennkraftmaschine einstellt.

Aus der als bekannt vorausgesetzten Haupteinspritzmenge $m_H$ und den gemessenen Luftzahlen $\lambda_H$, $\lambda_{HN}$ mit und ohne Nacheinspritzung wird dann die Nacheinspritzmenge $m_N$ nach folgender Formel berechnet:

$$m_N = m_H \cdot \left( \frac{\lambda_H}{\lambda_{HN}} - 1 \right).$$

Die so ermittelte Nacheinspritzmenge $m_N$ entspricht der vorgegebenen Einspritzdauer $T_N$ der Nacheinspritzung, wobei andere Werte der Einspritzdauer $T_N$ auch zu anderen Nacheinspritzmengen führen.

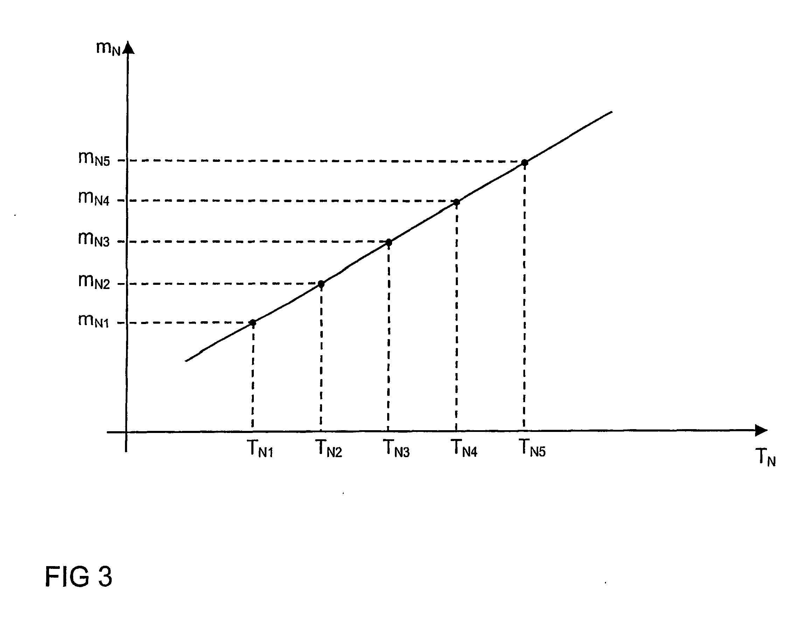

Das vorstehend beschriebene Verfahren wird deshalb nacheinander für unterschiedliche Werte der Nacheinspritzdauer $T_N$ durchgeführt, wobei jeweils die resultierende Nacheinspritzmenge $m_N$ ermittelt wird. Auf diese Weise werden dann nacheinander mehrere Stützstellen für eine in Figur 3 gezeigte Kennlinie gebildet, welche die Abhängigkeit der Nacheinspritzmenge $m_N$ von der Einspritzdauer $T_N$ wiedergibt.

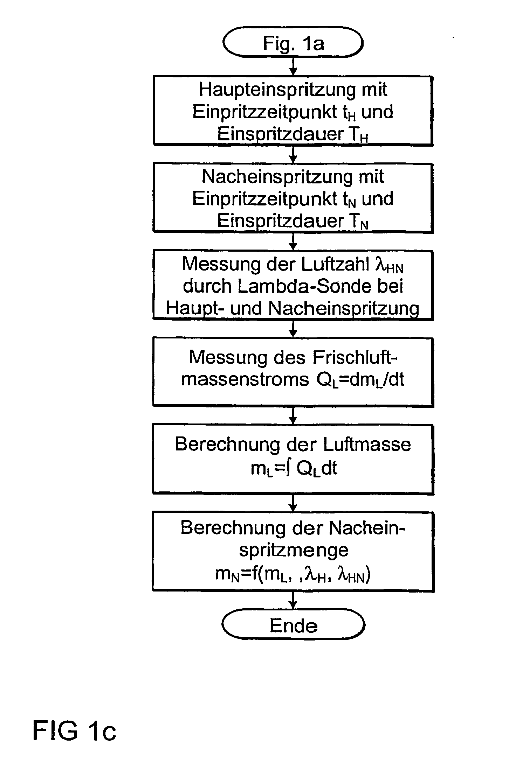

Das Flussdiagramm in Figur 1c zeigt einen alternativen Verfahrensabschnitt, der anstelle des in Figur 1b dargestellten Verfahrensabschnitts treten kann.

Hierbei wird mittels eines herkömmlichen Hitzdraht-Luftmassen-Durchflussmessers zusätzlich der Frischluftmassenstrom $Q_L = dm_L/dt$ der Brennkraftmaschine gemessen.

Der gemessene Frischluftmassenstrom $Q_L$ wird dann integriert, um die Luftmasse $m_L$ zu berechnen.

Aus den gemessenen Luftzahlen $\lambda_H$, $\lambda_{HN}$ mit und ohne Nacheinspritzung, dem stöchiometrischen Luft/Kraftstoff-Verhältnis $k \approx 14{,}7$ sowie der Luftmasse $m_L$ bzw. dem Frischluftmassenstrom $Q_L$ wird dann die Nacheinspritzmenge $m_N$ nach folgender Formel berechnet:

$$m_N = \left( \frac{1}{\lambda_{HN}} - \frac{1}{\lambda_H} \right) \cdot \left( \frac{m_L}{k} \right)$$

$$= \left( \frac{1}{\lambda_{HN}} - \frac{1}{\lambda_H} \right) \cdot \left( \frac{\int Q_L dt}{k} \right)$$

Bei dieser Variante des erfindungsgemäßen Verfahrens ist die genaue Kenntnis der Haupteinspritzmenge $m_H$ also nicht erforderlich.

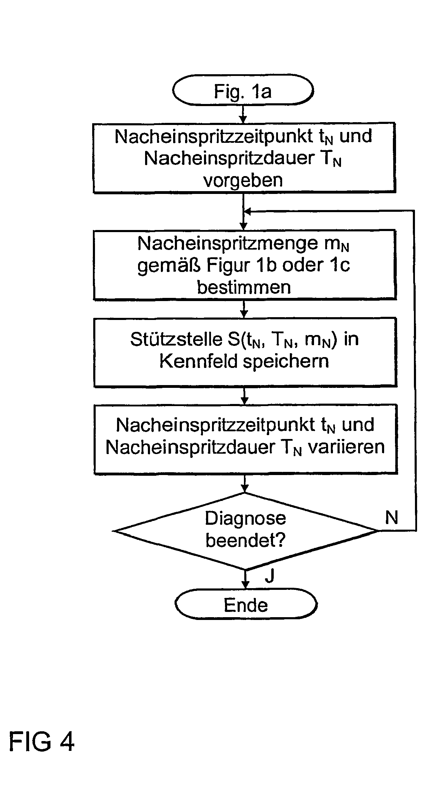

Schließlich zeigt das Flussdiagramm in Figur 4 eine Weiterbildung des erfindungsgemäßen Diagnoseverfahrens, bei dem die Nacheinspritzmenge für eine Vielzahl unterschiedlicher Werte des Nacheinspritzzeitpunkts $t_N$ und der Nacheinspritzdauer $T_N$ ermittelt wird.

Hierbei werden zunächst die in Figur 1a dargestellten Verfahrensschritte durchlaufen, um die Luftzahl $\lambda_H$ zu ermitteln, die ohne Nacheinspritzung allein durch die Haupteinspritzung verursacht werden.

Anschließend wird dann zunächst ein Wertepaar für den Nacheinspritzzeitpunkt $t_N$ und die Nacheinspritzdauer $T_N$ vorgegeben, wobei für dieses Wertepaar die resultierende Nacheinspritzmenge $m_N$ bestimmt wird, wie vorstehend zu Figur 1b oder 1c beschrieben wurde.

Die so bestimmte Nacheinspritzmenge $m_N$ wird dann zusammen mit dem zugehörigen Nacheinspritzzeitpunkt $t_N$ und der zugehörigen Nacheinspritzdauer $T_N$ als Stützstelle S in einem Kennfeld abgespeichert.

Anschließend wird dann der Nacheinspritzzeitpunkt $t_N$ und/oder die Nacheinspritzdauer $T_N$ variiert, um die resultierende Nacheinspritzmenge für unterschiedliche Betriebsbedingungen ermitteln zu können.

Das vorstehend beschriebene Verfahren wird dann wiederholt, bis das Diagnoseverfahren beendet ist. Dies kann beispielsweise dann der Fall sein, wenn eine vorgegebene Anzahl von Stützstellen $S(t_N, T_N, m_N)$ ermittelt und in dem Kennfeld abgespeichert wurde.

Während des normalen Betriebs der Brennkraftmaschine kann die Vor- oder Nacheinspritzmenge dann einfach ermittelt werden, indem der Wert entsprechend dem vorgegebenen Einspritzzeitpunkt und der vorgegebenen Einspritzdauer aus dem Kennfeld ausgelesen wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

**Patentansprüche**

1. Verfahren zur Ermittlung der Einspritzmenge einer Brennkraftmaschine mit den folgenden Schritten:

   - Haupteinspritzung von Kraftstoff
   - Nacheinspritzung von Kraftstoff nach der Haupteinspritzung während des Expansionstaktes und/oder während des Auslasstakts der Brennkraftmaschine
   - Ermittlung des aus der Nacheinspritzung resultierenden Abgaswerts ($\lambda_{HN}$)
   - Bestimmung der Nacheinspritzmenge ($m_N$) in Abhängigkeit von dem bei der Nacheinspritzung ermittelten Abgaswert ($\lambda_{HN}$),

   **dadurch gekennzeichnet,**
   **dass** eine Voreinspritzmenge einer Voreinspritzung mit einer Voreinspritzdauer ermittelt wird durch Durchführung einer Nacheinspritzung mit der Voreinspritzdauer, bei welcher ein gleicher Gegendruck im Brennraum herrscht wie bei der Voreinspritzung.

2. Verfahren nach einem der vorstehenden Ansprüche, **dadurch gekennzeichnet,** **dass** der Abgaswert ($\lambda_H$, $\lambda_{HN}$) bei alleiniger Haupteinspritzung und bei Haupt- und Nacheinspritzung ermittelt wird, wobei die Nacheinspritzmenge ($m_N$) in Abhängigkeit von beiden Abgaswerten ($\lambda_H$, $\lambda_{HN}$) bestimmt wird.

3. Verfahren nach einem der vorstehenden Ansprüche, **dadurch gekennzeichnet,** **dass** der Abgaswert ($\lambda_H$, $\lambda_{HN}$) die Luftzahl des Abgases oder der Kohlenwasserstoffanteil im Abgas oder der Kohlenmonoxidanteil im Abgas ist.

4. Verfahren nach mindestens einem der vorhergehenden Ansprüche, **gekennzeichnet durch** die Rückführung mindestens eines Teils des Abgases der Brennkraftmaschine mit dem nacheingespritzten Kraftstoff in den Ansaugtrakt der Brennkraftmaschine.

5. Verfahren nach mindestens einem der vorhergehenden Ansprüche, **gekennzeichnet durch**

   - Messen des Frischluftmassenstroms ($Q_L$) und
   - Bestimmung der Nacheinspritzmenge ($m_N$) in Abhängigkeit von dem ermittelten Frischluftmassenstrom ($Q_L$).

6. Verfahren nach mindestens einem der vorhergehenden Ansprüche, **gekennzeichnet durch**

   - Variieren der Betriebsbedingungen,
   - Ermitteln der jeweils resultierenden Nacheinspritzmengen.

7. Verfahren nach Anspruch 7, **dadurch gekennzeichnet,** **dass** die Nacheinspritzmenge nacheinander für unterschiedliche Nacheinspritzzeitpunkte und verschiedene Nacheinspritzdauern ermittelt wird.

8. Verfahren nach Anspruch 8, **dadurch gekennzeichnet,** **dass** die Abhängigkeit der Nacheinspritzmenge von Einspritzzeitpunkt und Einspritzdauer ermittelt und in einem Kennfeld abgespeichert wird.

## Claims

1. Method for determining the quantity of fuel injected into an internal combustion engine, having the following steps:

   - main injection of fuel
   - afterinjection of fuel according to the afterinjection during the firing stroke and/or during the exhaust stroke of the internal combustion engine
   - determining the exhaust gas value ($\lambda_{HN}$) resulting from the afterinjection
   - determining the quantity of afterinjected fuel ($m_N$) as a function of the exhaust gas value ($\lambda_{HN}$) determined during the afterinjection process,

   **characterised in that**,
   a quantity of preinjected fuel of a preinjection process with a preinjection duration is determined by implementing an afterinjection with the preinjection duration, in which an equal counter pressure is present in the combustion chamber as in the preinjection process.

2. Method according to one of the preceding claims **characterised in that** the exhaust gas value ($\lambda_H$, $\lambda_{HN}$) is determined with a sole main injection and with a main injection and afterinjection, with the quantity of afterinjected fuel ($m_N$) being determined as a function of both exhaust gas values ($\lambda_H$, $\lambda_{HN}$).

3. Method according to one of the preceding claims, **characterised in that** the exhaust gas value ($\lambda_H$, $\lambda_{HN}$) is the air ratio of the exhaust gas or the proportion of hydrocarbon in the exhaust gas or the proportion of carbon monoxide in the exhaust gas.

4. Method according to at least one of the preceding claims, **characterised by** feeding back at least one part of the exhaust gas of the internal combustion engine with the afterinjected fuel into the intake system of the internal combustion engine.

5. Method according to at least one of the preceding claims, **characterised by**

   - measuring the fresh air mass flow ($Q_L$) and
   - determining the quantity of afterinjected fuel ($m_N$) as a function of the determined fresh air mass flow ($Q_L$).

6. Method according to at least one of the preceding claims, **characterised by**

   - varying the operating conditions
   - determining the quantity of afterinjected fuel resulting in each instance.

**7.** Method according to claim 7
**characterised in that**
the quantity of afterinjected fuel is determined in succession for different afterinjection points in time and different afterinjection durations.

**8.** Method according to claim 8,
**characterised in that**
the dependency of the quantity of afterinjected fuel on the injection point in time and injection duration is determined and stored in a characteristic diagram.


## Revendications

**1.** Procédé de détermination du débit d'injection d'un moteur à combustion interne, comprenant les étapes suivantes :

- injection principale de carburant
- post-injection de carburant consécutive à l'injection principale pendant la phase de détente et/ou pendant la phase d'échappement du moteur à combustion interne
- détermination de la valeur de gaz d'échappement ($\lambda_{HN}$) résultant de la post-injection
- détermination du débit de post-injection ($m_N$) en fonction de la valeur de gaz d'échappement ($\lambda_{HN}$) déterminée lors de la post-injection,

**caractérisé en ce que**
un débit de pré-injection d'une pré-injection est déterminé avec une durée de pré-injection par exécution d'une post-injection avec la durée de pré-injection pour laquelle une même contre-pression est présentée dans la chambre de combustion que lors de la pré-injection.

**2.** Procédé selon la revendication 1,
**caractérisé en ce que**
la valeur de gaz d'échappement ($\lambda_H$, $\lambda_{HN}$) est déterminée pour une seule injection principale et pour une injection principale et une post-injection, le débit de post-injection ($m_N$) étant défini en fonction des deux valeurs de gaz d'échappement ($\lambda_H$, $\lambda_{HN}$).

**3.** Procédé selon l'une des revendications précédentes,
**caractérisé en ce que**
la valeur de gaz d'échappement ($\lambda_H$, $\lambda_{HN}$) est le facteur d'air des gaz d'échappement ou la part d'hydrocarbures dans les gaz d'échappement, ou la part de monoxyde de carbone dans les gaz d'échappement.

**4.** Procédé selon l'une des revendications précédentes,

**caractérisé par**
la recirculation d'au moins une partie des gaz d'échappement du moteur à combustion interne avec le carburant post-injecté vers la tubulure d'admission du moteur à combustion interne.

**5.** Procédé selon au moins une des revendications précédentes,
**caractérisé par**

- la mesure du débit massique d'air frais ($Q_L$), et
- la détermination du débit de post-injection ($m_N$) en fonction du débit massique d'air frais ($Q_L$) déterminé.

**6.** Procédé selon au moins une des revendications précédentes,
**caractérisé par**

- la variation des conditions de fonctionnement,
- la détermination des débits de post-injection respectivement résultants.

**7.** Procédé selon la revendication 6,
**caractérisé en ce que**
le débit de post-injection est déterminé successivement pour différents moments de post-injection et différentes durées de post-injection.

**8.** Procédé selon la revendication 7,
**caractérisé en ce que**
la relation entre le débit de post-injection et le moment de post-injection et la durée de post-injection est déterminée et mémorisée dans un diagramme caractéristique.

```
        ┌─────────────┐
        (    Start    )
        └──────┬──────┘
               ▼
    ┌────────────────────────┐
    │  Betriebsbedingungen   │
    │        prüfen          │
    └───────────┬────────────┘                ┌────────────────────────┐
                │            ◄──────────────── │  Betriebsbedingungen   │
                ▼                              │       anpassen         │
           ╱─────────╲                         └───────────┬────────────┘
          ╱  Betriebs- ╲       N                           │
         ╱  bedin-      ╲ ──────────────────────────────────┘
         ╲  gungen ok ? ╱
          ╲            ╱
           ╲─────────╱
               │ J
               ▼
    ┌────────────────────────┐
    │    Einstellung der     │
    │  Abgasrückführrate AGR │
    └───────────┬────────────┘
                ▼
    ┌────────────────────────┐
    │  Einstellung der Drossel-│
    │    klappenstellung DR  │
    └───────────┬────────────┘
                ▼
    ┌────────────────────────┐
    │   Haupteinspritzung mit │
    │  Einspritzzeitpunkt tH und│
    │    Einspritzdauer TH   │
    └───────────┬────────────┘
                ▼
    ┌────────────────────────┐
    │ Messung der Luftzahl λH durch│
    │     Lambda-Sensor      │
    └───────────┬────────────┘
                ▼
        ┌─────────────────┐
        ( Fig. 1b oder 1c )
        └─────────────────┘
```

**FIG 1a**

Haupteinspritzung mit Einspritzzeitpunkt $t_H$ und Einspritzdauer $T_H$

Messung der Luftzahl $\lambda_H$ durch Lambda-Sensor

Fig. 1a

Haupteinspritzung mit
Einpritzzeitpunkt $t_H$ und
Einspritzdauer $T_H$

Nacheinspritzung mit
Einpritzzeitpunkt $t_N$ und
Einspritzdauer $T_N$

Messung der Luftzahl $\lambda_{HN}$
durch Lambda-Sonde

Berechnung der
Nacheinspritzmenge
$m_N=f(\lambda_H, \lambda_{HN}, m_H)$

Ende

FIG 1b

```
┌─────────────────┐
│     Fig. 1a     │
└─────────────────┘
         │
         ▼
┌─────────────────────────────┐
│     Haupteinspritzung mit   │
│   Einpritzzeitpunkt $t_H$ und │
│     Einspritzdauer $T_H$     │
└─────────────────────────────┘
         │
         ▼
┌─────────────────────────────┐
│     Nacheinspritzung mit    │
│   Einpritzzeitpunkt $t_N$ und │
│     Einspritzdauer $T_N$     │
└─────────────────────────────┘
         │
         ▼
┌─────────────────────────────┐
│  Messung der Luftzahl $\lambda_{HN}$ │
│    durch Lambda-Sonde bei   │
│  Haupt- und Nacheinspritzung│
└─────────────────────────────┘
         │
         ▼
┌─────────────────────────────┐
│   Messung des Frischluft-   │
│  massenstroms $Q_L=dm_L/dt$ │
└─────────────────────────────┘
         │
         ▼
┌─────────────────────────────┐
│   Berechnung der Luftmasse  │
│      $m_L=\int Q_L dt$      │
└─────────────────────────────┘
         │
         ▼
┌─────────────────────────────┐
│  Berechnung der Nachein-    │
│        spritzmenge          │
│ $m_N=f(m_L, ,\lambda_H, \lambda_{HN})$ │
└─────────────────────────────┘
         │
         ▼
┌─────────────────┐
│      Ende       │
└─────────────────┘
```

FIG 1c

FIG 2

FIG 3

EP 1 565 649 B1

```
            ┌──────────────┐
            │   Fig. 1a    │
            └──────┬───────┘
                   ↓
  ┌────────────────────────────────┐
  │ Nacheinspritzzeitpunkt $t_N$ und │
  │   Nacheinspritzdauer $T_N$       │
  │          vorgeben                │
  └────────────────┬───────────────┘
                   ↓
  ┌────────────────────────────────┐
  │   Nacheinspritzmenge $m_N$      │
  │   gemäß Figur 1b oder 1c        │
  │        bestimmen                │
  └────────────────┬───────────────┘
                   ↓
  ┌────────────────────────────────┐
  │ Stützstelle $S(t_N, T_N, m_N)$ in │
  │     Kennfeld speichern          │
  └────────────────┬───────────────┘
                   ↓
  ┌────────────────────────────────┐
  │ Nacheinspritzzeitpunkt $t_N$ und │
  │ Nacheinspritzdauer $T_N$ variieren │
  └────────────────┬───────────────┘
                   ↓
            ◇ Diagnose    ◇  N
            ◇ beendet?    ◇
                   ↓ J
            ┌──────────────┐
            │    Ende      │
            └──────────────┘
```

**FIG 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19961292 A1

- DE 19961299 A2